**Europäisches Patentamt**

**European Patent Office**

**Office européen des brevets**

(19)

(11) Veröffentlichungsnummer: **0 417 608 A2**

(12) **EUROPÄISCHE PATENTANMELDUNG**

(21) Anmeldenummer: 90116987.0

(22) Anmeldetag: 04.09.90

(51) Int. Cl.5: **H02G 15/013**

(30) Priorität: 13.09.89 DE 3930628

(43) Veröffentlichungstag der Anmeldung:
20.03.91 Patentblatt 91/12

(84) Benannte Vertragsstaaten:
AT BE CH DE ES FR GB IT LI NL SE

(71) Anmelder: **Siemens Aktiengesellschaft**
**Wittelsbacherplatz 2**
**W-8000 München 2(DE)**

(72) Erfinder: **Schröder, Günter**
**Eichenweg 6**
**W-8031 Wessling(DE)**

(54) **Geteilte Runddichtung für Dichtungskörper bei Kabelgarnituren.**

(57) Bei der Erfindung handelt es sich um eine geteilte Runddichtung (RD) für die Abdichtung zwischen einem Dichtungskörper (DK) und einem Muffenrohr einer Kabelgarnitur. Die Schnittstelle der schlauchförmigen Runddichtung (RD) wird mit einem Verbindungsstift (VS) im Inneren des Schlauches überbrückt.

FIG 1

EP 0 417 608 A2

## GETEILTE RUNDDICHTUNG FÜR DICHTUNGSKÖRPER BEI KABELGARNITUREN

Die Erfindung betrifft eine geteilte Runddichtung auf Kunststoff für Dichtungskörper bei Kabelgarnituren.

Bei Kabelmuffen, die aus einem zylindrischen Mittelteil und zwei stirnseitigen Dichtungskörpern zum Einführen der Kabel bestehen, sind unter anderem Dichtungen zwischen dem äußeren Umfang der Dichtungskörper und der Innenwandung des zylindrischen Teils nötig. Hier werden im allgemeinen geschlossene Runddichtungen verwendet. Beim Anlegen einer solchen Muffe über ungeschnittene Kabel oder wenn auch nur wenige Adern des Kabels abgezweigt werden, ist jedoch die Anbringung einer ringförmigen Runddichtung nicht möglich. Die Ringdichtung muß also aufgeschnitten werden und kann dann erst um das Kabel und schließlich auf den Dichtungskörper gelegt werden, wobei die Ringdichtung an ihre Schnittstelle wieder verbunden werden muß. Bisher wurde eine solche Verbindung durch Verkleben der Enden in einer Zentrierform durchgeführt. Besonders unbefriedigend ist das Ergebnis bei dieser Lösung, wenn für die Runddichtung Silikonkautschuk verwendet wird; denn die Aushärtezeit eines solchen Klebers nimmt mehrere Stunden in Anspruch.

So liegt dieser Erfindung die Aufgabe zugrunde, eine Möglichkeit zur Verbindung der aufgeschnittenen Ringdichtung zu finden, bei der keine zusätzlichen Wartezeiten für das Aushärten des Klebers anfallen. Die gestellte Aufgabe wird nun mit einer geteilten Runddichtung der eingangs erläuterten Art dadurch gelöst, daß ein dickwandiger, elastischer Schlauch als Runddichtung in der Dichtungsnut des Dichtungskörpers eingesetzt ist, daß der Schlauch quer geteilt ist und daß in den beiden stirnseitigen Schlauchöffnungen der Schnittstelle ein die Schnittstelle überbrückender Verbindungsstift eingeführt ist, wobei der Außendurchmesser des Verbindungsstiftes dem Innendurchmesser der Schlauchöffnung entspricht.

Vorteile der Erfindung liegen nun darin, daß bei dem Zusammenfügen der geschnittenen Runddichtung keine Wartezeiten entstehen, wobei außerdem auf eine bisher übliche Zentriervorrichtung verzichtet werden kann, da der in der Schnittstelle eingebrachte Verbindungsstift die Zentrierung und gegenseitige Fixierung übernimmt.

Die Erfindung wird nun anhand von 8 Figuren näher erläutert.

Figur 1 zeigt das Umlegen einer geschnittenen Runddichtung nach der Montage der Dichtungskörper einer Kabelmuffe.

Figur 2 zeigt das Prinzip der Verbindung der Runddichtung in der Schnittstelle vor dem Zusammenfügen.

Figur 3 zeigt eine Zwischenphase bei der Montage.

Figur 4 zeigt das Aufbringen eines Dichtmittels in der Schnittstelle.

Figur 5 zeigt die fertig montierte Schnittstelle.

Figur 6 zeigt eine Ausführungsform des Verbindungsstiftes mit Widerhaken an der Oberfläche.

Figur 7 zeigt einen Gewindestift als Verbindungsstift.

Figur 8 zeigt eine gebogene Ausführung eines Verbindungsstiftes.

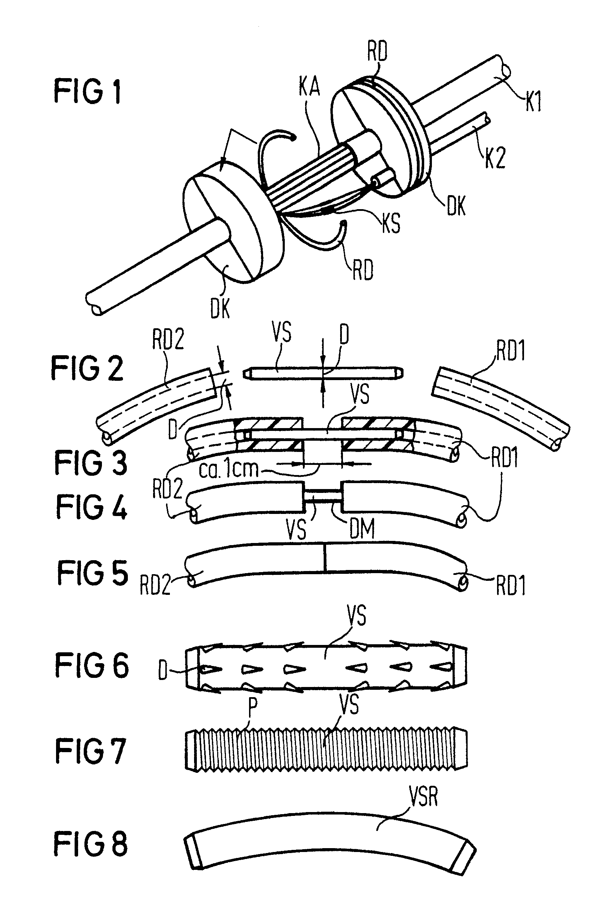

Figur 1 zeigt die Problematik beim Aufbringen der Runddichtungen RD auf die stirnseitig angeordneten Dichtungskörper DK einer Kabelmuffe, bei der z.B. nur ein Teil der Kabeladern KA eines Kabels für einen Kabelspleiß KS aufgetrennt werden, während die übrigen Kabeladern KA ungeschnitten im Kabel K1 weitergeführt werden. Daraus ergibt sich, daß die Runddichtungen RD aufgeschnitten werden müssen, wie in der Figur angedeutet ist.

Die Figur 2 zeigt nun eine Verbindung der Enden RD1 und RD2 einer geschnittenen Runddichtung RD im Sinne der Erfindung. Es wird in solchen Fällen ein dickwandiger Schlauch verwendet. In die beiden Schlauchöffnungen der beiden zu verbindenden Enden RD1 und RD2 wird nun ein gemeinsamer Verbindungsstift VS so eingeführt, daß er die Schnittstelle überbrückt. Der Innendurchmesser des Schlauches und der Außendurchmesser des Ver bindungsstiftes VS sind so aufeinander abgestimmt, daß eine rutschfeste Verbindung erfolgen kann. In Figur 2 sind diese Verhältnisse dargestellt.

Die Figur 3 verdeutlicht in einem Teilschnittbild, daß der Verbindungsstift VS in einer ersten Verbindungsphase nicht vollends eingeschoben wird; zweckmäßigerweise nur so weit, daß noch etwa 1 cm Zwischenraum bestehen bleibt.

Die Figur 4 zeigt den folgenden Schritt, bei dem der noch verbleibende Zwischenraum mit einem an sich bekannten Dichtmittel DM, z.B. ein schweres Silikonfett, benetzt wird, das unter anderem auch zur Abdichtung von Riefen im Kabelmantel in den Einführungsbereichen verwendet wird.

Die Figur 5 zeigt schließlich den Endzustand der Verbindung zwischen den beiden Enden RD1 und RD2 der Runddichtung.

In Figur 6 wird nun angedeutet, daß der Verbindungsstift VS beispielsweise auf seiner Oberfläche mit widerhakenähnlichen Erhebungen versehen werden kann, um unbeabsichtigtes Lösen der Verbindungsstelle zu erschweren.

Die Figur 7 zeigt ein weiteres Beispiel für eine rutschfeste Fixierung der beiden Enden, bei dem ringförmige oder gewindeartige Wülste auf der Oberfläche des Verbindungsstiftes VS angeordnet sind.

Schließlich wird in Figur 8 ein Verbindungsstift VSR gezeigt, der in Längsrichtung gekrümmt ist und zwar so, daß er dem Kreisumfang des Dichtungskörpers DK angepaßt ist, sodaß sich die Ringdichtung auch in der Schnittstelle garantiert eng anliegen läßt.

Die Verbindungsstifte können im allgemeinen aus beliebigen Material bestehen, doch reicht es völlig aus, sie aus einem Kunststoffmaterial, wie z.B. Polyethylen, herzustellen, da Zug- oder Biegebeanspruchungen kaum in Erscheinung treten.

## Ansprüche

1. Geteilte Runddichtung aus Kunststoff für Dichtungskörper bei Kabelgarnituren, **dadurch gekennzeichnet,** daß ein dickwandiger; elastischer Schlauch als Runddichtung (RD) in der Dichtungsnut des Dichtungskörpers (DK) eingesetzt ist,
daß der Schlauch quer geteilt ist und
daß in den beiden stirnseitigen Schlauchöffnungen der Schnittstelle ein die Schnittstelle überbrückender Verbindungsstift (VS) eingeführt ist, wobei der Außendurchmesser des Verbindungsstiftes (VS) dem Innendurchmesser der Schlauchöffnung entspricht.
2. Geteilte Runddichtung nach Anspruch 1, **dadurch gekennzeichnet,** daß der Verbindungsstift (VS) auf seiner Oberfläche Profilierungen aufweist.
3. Geteilte Runddichtung nach Anspruch 2, **dadurch gekennzeichnet,** daß als Profilierung ein Gewinde angeordnet ist.
4. Geteilte Runddichtung nach Anspruch 2, **dadurch gekennzeichnet,** daß als Profilierung ringförmige Wülste angeordnet sind.
5. Geteilte Runddichtung nach Anspruch 2,- **dadurch gekennzeichnet,** daß als Profilierung widerhakenähnliche Ansätze, vorzugsweise Dornen angeordnet sind.
6. Geteilte Runddichtung nach einem der vorhergehenden Ansprüche, **dadurch gekennzeichnet,** daß der Verbindungsstift im Schnittstellenbereich mit einem Dichtmittel, vorzugsweise mit einem schweren Silikonfett, benetzt ist.
7. Geteilte Runddichtung nach einem der vorhergehenden Ansprüche, **dadurch gekennzeichnet,** daß der Schlauch vorzugsweise aus Silikon besteht.
8. Geteilte Runddichtung nach einem der vorhergehenden Ansprüche, **dadurch gekennzeichnet,** daß das Material des Schlauches geschäumt ist.
9. Profilierung nach einem der vorhergehenden Ansprüche, **dadurch gekennzeichnet,** daß der Verbindungsstift (VS) aus Kunststoffmaterial, vorzugsweise aus Polyethylen, besteht.
10. Geteilte Runddichtung nach einem der vorhergehenden Ansprüche, **dadurch gekennzeichnet,** daß der Verbindungsstift (VS) in seiner Längsausdehnung dem Radius des Dichtungskörpers (DK) entsprechend gebogen ist.

FIG 1

FIG 2

FIG 3

FIG 4

FIG 5

FIG 6

FIG 7

FIG 8